# EUROPÄISCHE PATENTSCHRIFT

(11) **EP 1 125 660 B1**
(45) Veröffentlichungstag und Bekanntmachung des Hinweises auf die Patenterteilung: **08.11.2006**
(21) Anmeldenummer: 01101033.7
(22) Anmeldetag: 18.01.2001
(51) Int. Cl.: B23B 27/14

(54) **Schneidplatte**
Cutting insert
Plaquette de coupe

(30) Priorität: 05.02.2000 DE 10005268; 06.05.2000 DE 10022199; 25.07.2000 DE 10036464; 22.08.2000 DE 10041023
(43) Veröffentlichungstag der Anmeldung: 22.08.2001
(73) Patentinhaber: CeramTec AG Innovative Ceramic Engineering, 73207 Plochingen (DE)
(72) Erfinder: Dunklau, Klaus, 73773 Aichwald (DE)
(74) Vertreter: Scherzberg, Andreas Hans

(56) Entgegenhaltungen:
- FR-A- 2 292 547
- US-A- 4 480 950
- US-A- 5 836 723
- "ALUMINIUMDREHEN JETZT BEI HOEHEREN SCHNITTGESCHWINDIGKEITEN" WERKSTATT UND BETRIEB,DE,CARL HANSER VERLAG. MUNCHEN, Bd. 124, Nr. 7, 1. Juli 1991 (1991-07-01), Seite 590 XP000227472 ISSN: 0043-2792

## Beschreibung

Die Erfindung betrifft eine Wendeschneidplatte aus Keramik zum Einspannen in ein Schneidwerkzeug zum Zerspanen von Gußwerkstoffen nach dem Oberbegriff des Anspruchs 1.

Aus der EP 0 075 177 ist eine Wendeschneidplatte aus Keramik zum Einspannen in ein Schneidwerkzeug zum Zerspanen von Gußwerkstoffen, insbesondere Gußeisen, bekannt. Die Schneidplatte enthält auf ihrer Oberseite eine sternförmige Mulde mit vier Zacken zum Eingriff einer Spannpratze bzw. eines Klemmfingers des Schneidwerkzeugs, wobei jede Ecke der Wendeschneidplatte eine Nebenschneide und eine Hauptschneide aufweist.

Das Schneidwerkzeug besteht demnach aus einem Klemmhalter und einer in den Klemmhalter einzusetzenden auswechselbaren Schneidplatte. Die Schneidplatte ist dasjenige Teil, das an dem Werkstück angreift und dieses spanend bearbeitet. Die Schneidplatte muß daher aus extrem hartem Material bestehen, das bei der Bearbeitung metallischer Werkstücke einen möglichst geringen Abrieb hat.

Werkstoffe, die diesen Anforderungen genügen, sind oxidkeramische Werkstoffe, wie beispielsweise Aluminium-Oxid oder Zirkon-Oxid. Solche keramischen Werkstoffe haben eine sehr hohe Härte und Druckfestigkeit, jedoch eine nur begrenzte Zugfestigkeit.

Der Erfindung liegt die Aufgabe zugrunde, eine Wendeschneidplatte nach dem Oberbegriff des Anspruchs 1 so zu verbessern, dass die Gußspäne von der Schneidkante abgeführt werden und dadurch die Schneidkante entlastet wird.

Erfindungsgemäß wird diese Aufgabe dadurch gelöst, dass die Ecken in ca. ¼ der diagonalen Ebene eingeschliffen, eingepresst oder eingespritzt sind und so eine Dreiecksfläche bzw. Spanformstufe bilden und die Dreiecksfläche zumindest eine Neigung aufweist. Hierdurch werden die Gußspäne von der Schneidkantenecke zur Mitte der Schneidplatte hin abgeführt und entlasten dadurch die Schneidkante. Es wird durch diese Maßnahmen eine positive Spanformstufe geschaffen.

In einer bevorzugten Ausführungsform ist die Dreiecksfläche von der Nebenschneide in Richtung Seitenmitte mit einem Winkel α geneigt.

Eine alternative Ausführungsform ist dadurch gekennzeichnet, dass die Dreiecksfläche von der Diagonalen in zwei Teilflächen geteilt ist und zumindest eine Teilfläche von der Hauptschneide bzw. der Nebenschneide rechtwinklig um einen Winkel α zur Symmetriemitte hin geneigt ist. Vorteilhafterweise sind beide Teilflächen zur Symmetriemitte hin geneigt. Mit Symmetriemitte ist der Schnittpunkt der Diagonalen der Schneidplatte mit der Hypothenuse der Dreiecksfläche verstanden.

Der Winkel α liegt bevorzugt zwischen 3 und 12°. Bei einer Plattendicke d von 5 mm ergibt sich z. B. eine bevorzugte maximale Absenkung x von 1,5 mm.

Erfindungsgemäß sind die Nebenschneiden an ihrem äußeren Rand bevorzugt mit einer Planauflagefläche versehen, die beim Wenden der Schneidplatte die auf der anderen Seite befindliche Hauptschneide entlastet.

Es ist ein wichtiges Merkmal der Erfindung, dass die Schneidplatte als Wendeschneidplatte ausgebildet ist, wobei die Nebenschneiden und Hauptschneiden auf den beiden Seiten jeweils um 90° versetzt angeordnet sind, so dass eine Hauptschneide auf der einen Seite einer Nebenschneide auf der anderen Seite gegenüberliegt und umgekehrt. Durch die Planauflagefläche entlang der Nebenschneide ist somit die Hauptschneide auf der anderen Seite abgestützt.Die Planauflagefläche erstreckt sich bevorzugt über die gesamte Länge der Nebenschneide und weist eine Breite von bevorzugt 1 mm auf.

Jede Ecke wird von der zugehörigen Diagonalen in zwei Dreiecke unterteilt. Bei Draufsicht auf eine Oberseite ist in Uhrzeigerrichtung gesehen vor der Diagonalen die Hauptschneide und hinter der Diagonalen die Nebenschneide angeordnet. Dies gilt für rechtslaufende Schneidplatten. Für linkslaufende Schneidplatten ist dies umgekehrt der Fall.

Zur Befestigung der Schneidplatte im Schneidwerkzeug weist die Schneidplatte in einer bevorzugten Ausführungsform eine sternförmige Mulde mit vier Zacken auf, wobei die Zacken jeweils auf die Mitte einer Längsseite ausgerichtet sind. In die Mulde greift ein Klemmfinger einer Spannpratze des Schneidwerkzeugs so ein, daß diese in ihrer Lage fixiert ist.

Erfindungsgemäß können alle vier Ecken einer Oberseite der Schneidplatte zum Schneiden verwendet werden. Auf der Rückseite der Schneidplatte ist eine identische Mulde angeordnet, so dass insgesamt acht Ecken zum Schneiden zur Verfügung stehen.

In einer alternativen Ausführungsform ist an Stelle der Mulde ein Loch zum Eingriff eines Spannbolzens des Schneidwerkzeugs in der Schneidplatte angeordnet.

Die Wendeschneidplatte kann auch außer den erfindungsgemäß ausgebildeten Ecken eine glatte Oberfläche aufweisen. Diese Schneidplatten werden auch als glatte Schneidplatten bezeichnet.

Weitere Merkmale ergeben sich aus den Figuren, die nachfolgend beschrieben sind. Es zeigt:
- Fig. 1a, b, c: eine erfindungsgemäße Wendeschneidplatte mit Blickrichtung von oben, unten und von der Seite,
- Fig. 2: einen Schnitt entlang der Linie A - A in Fig. 1c,
- Fig. 3: einen Schnitt entlang der Linie B - B in Fig. 1c,
- Fig. 4: eine Ansicht eines Klemmhalters mit eingesetzter erfindungsgemäßer Wendeschneidplatte und
- Fig. 5a, b, c, d: eine erfindungsgemäße Wendeschneidplatte mit zwei geneigten Teilflächen der Dreiecksfläche.

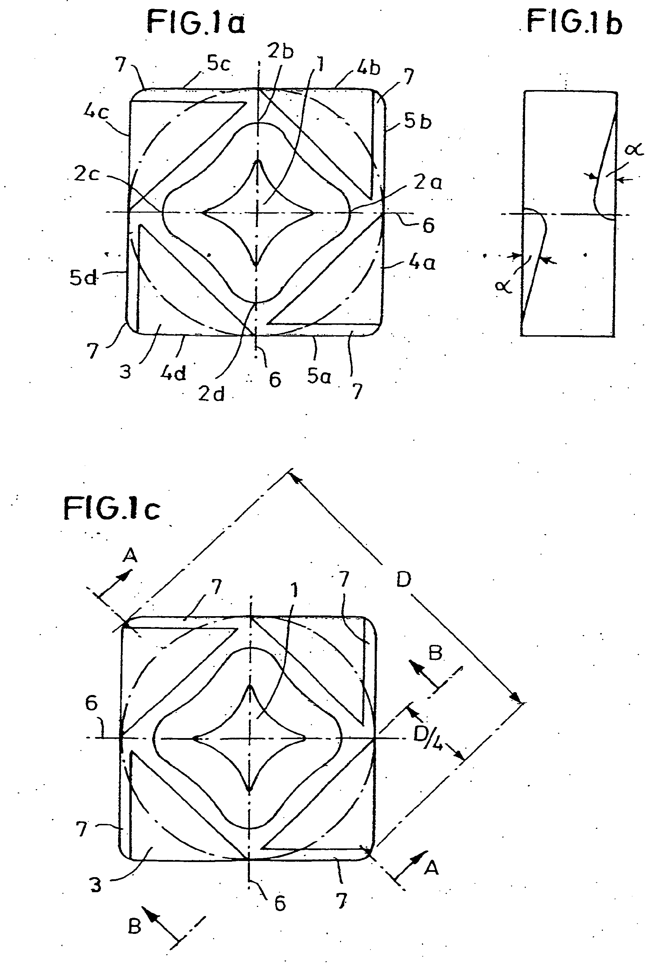

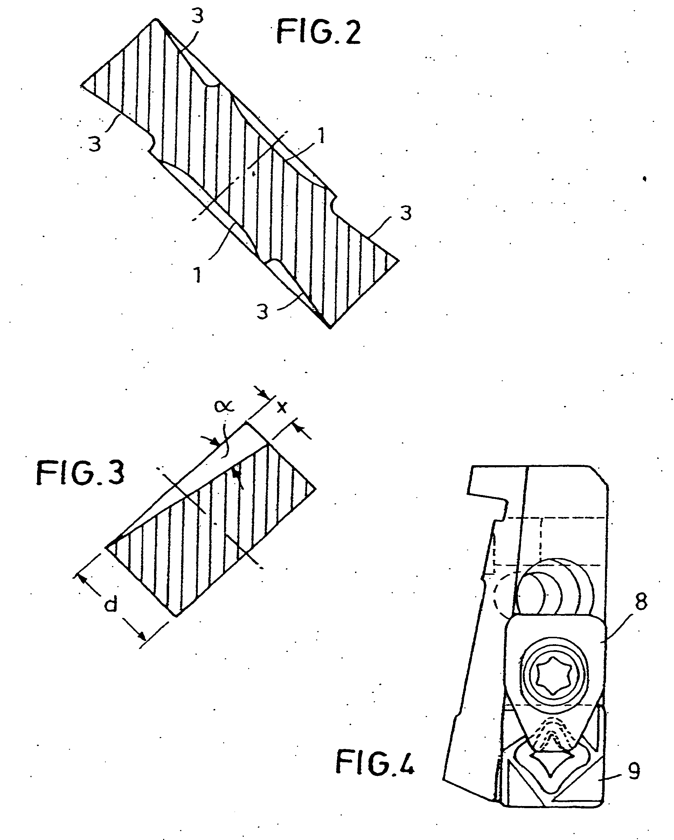

Figur 1a zeigt eine Seite einer Wendeschneidplatte mit einer sternförmigen Mulde 1 mit vier Zacken 2a, 2b, 2c, 2d, die jeweils auf die Mitte 6 einer Längsseite ausgerichtet sind. Die Mulde 1 ist so geformt, dass ein Klemmfinger einer Klemmpratze eines Schneidwerkzeugs die Wendeschneidplatte in spannender Berührung im Schneidwerkzeug fixiert (siehe hierzu Fig. 4).

Die Ecken der Wendeschneidplatte sind jeweils eingeschliffen oder eingepresst und bilden eine Spanformstufe in Form und Gestalt einer Dreiecksfläche 3. Die Hauptschneiden sind nachfolgend mit den Bezugszeichen 4a, 4b, 4c, 4d bezeichnet und die Nebenschneiden mit den Bezugszeichen 5a, 5b, 5c, 5d. Es wird hierbei von einer rechtslaufenden Platte ausgegangen.

Von einer Ecke aus gesehen erstreckt sich die Spanformstufe bzw. Dreiecksfläche 3 zu ca. ¼ der Länge der Diagonalen D der Schneidplatte in die Platte hinein (siehe Fig. 1c).

Die Spanformstufe 3 bildet dabei eine Dreiecksfläche, die sich von der Nebenschneide 5a, 5b, 5c, 5d in Richtung Seitenmitte 6 mit einem Winkel α neigt. Dieser Winkel α liegt zwischen 3 und 12°, bevorzugt zwischen 8 und 12°. In diesem Speziellen Fall liegt der Winkel α bei 11° (siehe hierzu auch Fig. 3).

Fig. 1c zeigt die Wendeschneidplatte gemäß Fig. 1a von der Unterseite. Im Vergleich der Figuren 1a und 1c ist gut zu erkennen, dass die Nebenschneiden 5a, 5b, 5c, 5d und Hauptschneiden 4a, 4b, 4c, 4d auf den beiden Seiten der Wendeschneidplatte jeweils um 90° versetzt angeordnet sind, so dass einer Hauptschneide 4a, 4b, 4c, 4d auf der einen Seite eine Nebenschneide 5a, 5b, 5c, 5d auf der anderen Seite gegenüberliegt.

Zur Abstützung der Hauptschneiden 4a, 4b, 4c, 4d sind die Nebenschneiden 5a, 5b, 5c, 5d an ihrem äußeren Rand mit einer Planauflagefläche 7 versehen, welche die auf der anderen Seite der Schneidplatte befindliche Hauptschneide 4a, 4b, 4c, 4d im Einsatzfall entlastet.

Figur 2 zeigt einen Schnitt entlang der Linie A - A in Fig. 1c.

Fig. 4 zeigt die Ansicht eines Klemmhalters mit einer Spannpratze 8, die eine erfindungsgemäße Wendeschneidplatte 9 spannend fixiert. Der Spannwinkel beträgt in dieser Ausführungsform -8° und der Neigungswinkel -7°.

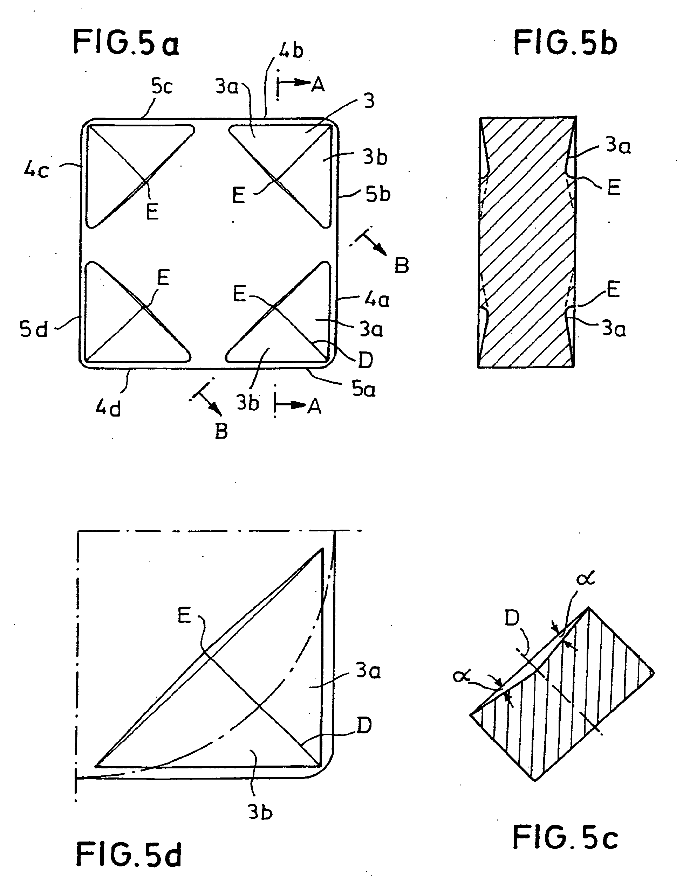

Fig. 5a - d zeigen eine erfindungsgemäße Wendeschneidplatte, bei der die Dreiecksfläche 3 von der Diagonalen D in zwei Teilflächen 3a, 3b geteilt wird. Zur Abführung der Späne sind die beiden Teilflächen von der Hauptschneide (4a, 4b, 4c, 4d) bzw. der Nebenschneide (5a, 5b, 5c, 5d) rechtwinklig um einen Winkel *α* zur Symmetriemitte E hin geneigt. Fig. 5d zeigt eine Ecke der Schneidplatte vergrößert. Fig. 5b zeigt einen Schnitt entlang der Linie A-A von Fig. 5a und Fig. 5c einen Schnitt entlang der Linie B-B von Fig. 5a. Der Winkel *α* der beiden Neigungen liegt in diesem Fall bei 3°. Es können jedoch auch andere Winkel angewendet werden, wenn hierdurch eine ausreichende Spanabfuhr gewährleistet ist.

## Patentansprüche

1. Wendeschneidplatte (9) aus Keramik zum Einspannen in ein Schneidwerkzeug zum Zerspanen von Gußwerkstoffen, wobei jede Ecke der Wendeschneidplatte (9) eine Nebenschneide (5a, 5b, 5c, 5d) und eine Hauptschneide (4a, 4b, 4c, 4d) aufweist, **dadurch gekennzeichnet, dass** die Ecken der Wendeschneidplatte (9) in ca. ¼ der diagonalen Ebene (D) eingeschliffen, eingepreßt oder eingespritzt sind und eine Dreiecksfläche (3) bilden und die Dreiecksfläche (3) zumindest eine Neigung aufweist.

2. Wendeschneidplatte nach Anspruch 1, **dadurch gekennzeichnet, dass** die Dreiecksfläche (3) von der Nebenschneide (5a, 5b, 5c, 5d) in Richtung Seitenmitte (6) mit einem Winkel *α* geneigt ist.

3. Wendeschneidplatte nach Anspruch 1, **dadurch gekennzeichnet, dass** die Dreiecksfläche (3) von der Diagonalen (D) in zwei Teilflächen (3a, 3b) geteilt ist und zumindest eine Teilfläche (3a, 3b) von der Hauptschneide (4a, 4b, 4c, 4d) bzw. der Nebenschneide (5a, 5b, 5c, 5d) rechtwinklig um einen Winkel *α* zur Symmetriemitte (E) hin geneigt ist.

4. Wendeschneidplatte nach Anspruch 3, **dadurch gekennzeichnet, dass** beide Teilflächen (3a, 3b) zur Symmetriemitte (E) hin geneigt sind.

5. Wendeschneidplatte nach einem der Ansprüche 1 bis 5, **dadurch gekennzeichnet, dass** der Winkel *α* zwischen 3° und 12° liegt.

6. Wendeschneidplatte nach einem der Ansprüche 1 bis 5, **dadurch gekennzeichnet, dass** die Nebenschneiden (5a, 5b, 5c, 5d) und Hauptschneiden (4a, 4b, 4c, 4d) auf den beiden Seiten der Wendeschneidplatte (9) um 90° versetzt angeordnet sind, so dass eine Hauptschneide (4a, 4b, 4c, 4d) auf der einen Seite einer Nebenschneide (5a, 5b, 5c, 5d) auf der anderen Seite gegenüberliegt und umgekehrt.

7. Wendeschneidplatte nach einem der Ansprüche 1 bis 6, **dadurch gekennzeichnet, dass** die Nebenschneiden (5a, 5b, 5c, 5d) an ihrem äußeren Rand mit einer Planauflagefläche (7) versehen sind.

8. Wendeschneidplatte nach Anspruch 7, **dadurch gekennzeichnet, dass** sich die Planauflagefläche (7) über die gesamte Länge der Nebenschneide (5a, 5b, 5c, 5d) erstreckt.

9. Wendeschneidplatte nach Anspruch 7 oder 8, **dadurch gekennzeichnet, dass** sich die Planauflagefläche (7) über die gesamte Länge der Nebenschneide (5a, 5b, 5c, 5d) erstreckt.

10. Wendeschneidplatte nach einem der Ansprüche 1 bis 9, **dadurch gekennzeichnet, dass** für linkslaufende Schneidplatten (9) bei Draufsicht auf eine Seite der Wendeschneidplatte (9) in Uhrzeigerrichtung gesehen vor der Diagonalen (D) die Hauptschneide (4a, 4b, 4c, 4d) und hinter der Diagonalen (D) die Nebenschneide (5a, 5b, 5c, 5d) angeordnet ist und dies bei rechtslaufenden Schneidplatten umgekehrt der Fall ist.

11. Wendeschneidplatte nach einem der Ansprüche 1 bis 10, **dadurch gekennzeichnet, dass** auf jeder Seite der Wendeschneidplatte (9) eine Mulde (1) zum Eingriff einer Spannpratze (8) des Schneidwerkzeugs angeordnet ist.

12. Wendeschneidplatte nach Anspruch 11, **dadurch gekennzeichnet, dass** die Mulde (1) sternförmig ausgebildet ist und vier Zacken (2a, 2b, 2c, 2d) aufweist.

13. Wendeschneidplatte nach Anspruch 12, **dadurch gekennzeichnet, dass** die Zacken (2a, 2b, 2c, 2d) der Mulde (1) auf die Mitte (6) der Längsseiten ausgerichtet sind.

14. Wendeschneidplatte nach einem der Ansprüche 1 bis 10, **dadurch gekennzeichnet, dass** in der Wendeschneidplatte (9) ein Loch zum Eingriff eines Spannbolzens des Schneidwerkzeugs angeordnet ist.

15. Wendeschneidplatte nach einem der Ansprüche 1 bis 10, **dadurch gekennzeichnet, dass** die Wendeschneidplatte (9) außer den erfindungsgemäß ausgebildeten Ecken eine glatte Oberfläche aufweist.

## Claims

1. A reversible cutting plate (9) made from ceramic material for chucking in a cutting tool for machining cast materials, with each corner of the reversible cutting plate (9) having a minor cutting edge (5a, 5b, 5c, 5d) and a major cutting edge (4a, 4b, 4c, 4d), **characterised in that** the corners of the reversible cutting plate (9) are ground in, pressed in or injected in approximately ¼ of the diagonal plane (D) and form a triangular face (3), and the triangular face (3) has at least one incline.

2. A reversible cutting plate according to claim 1, **characterised in that** the triangular face (3) is inclined at an angle α from the minor cutting edge (5a, 5b, 5c, 5d) in the direction of the centre (6) of a side.

3. A reversible cutting plate according to claim 1, **characterised in that** the triangular face (3) is divided by the diagonal (D) into two partial faces (3a, 3b), and at least one partial face (3a, 3b) is inclined from the major cutting edge (4a, 4b, 4c, 4d) or the minor cutting edge (5a, 5b, 5c, 5d) respectively at right angles, at an angle α towards the centre of symmetry (E).

4. A reversible cutting plate according to claim 3, **characterised in that** both partial faces (3a, 3b) are inclined towards the centre of symmetry (E).

5. A reversible cutting plate according to one of claims 1 to 5 (sic), **characterised in that** the angle α lies between 3° and 12°.

6. A reversible cutting plate according to one of claims 1 to 5, **characterised in that** the minor cutting edges (5a, 5b, 5c, 5d) and major cutting edges (4a, 4b, 4c, 4d) are arranged on the two sides of the reversible cutting plate (9) in such a way that they are staggered by 90° so that one major cutting edge (4a, 4b, 4c, 4d) on the one side lies opposite one minor cutting edge (5a, 5b, 5c, 5d) on the other side and *vice versa.*

7. A reversible cutting plate according to one of claims 1 to 6, **characterised in that** the minor cutting edges (5a, 5b, 5c, 5d) are provided with a planar supporting surface (7) at their outer edge.

8. A reversible cutting plate according to claim 7, **characterised in that** the planar supporting surface (7) extends over the entire length of the minor cutting edge (5a, 5b, 5c, 5d).

9. A reversible cutting plate according to claim 7 or 8, **characterised in that** the planar supporting surface (7) extends over the entire length of the minor cutting edge (5a, 5b, 5c, 5d).

10. A reversible cutting plate according to one of claims 1 to 9, **characterised in that** for cutting plates (9) that rotate from right to left in the plan view of one side of the reversible cutting plate (9), viewed in the clockwise direction, the major cutting edge (4a, 4b, 4c, 4d) is arranged in front of the diagonal (D) and the minor cutting edge (5a, 5b, 5c, 5d) is arranged behind the diagonal (D), and this is the reverse for cutting plates that rotate from left to right.

11. A reversible cutting plate according to one of claims 1 to 10, **characterised in that** a depression (1) is arranged on each side of the reversible cutting plate (9) for the engagement of a chucking claw (8) of the cutting tool.

12. A reversible cutting plate according to claim 11, **characterised in that** the depression (1) is formed in the shape of a star and has four points (2a, 2b, 2c, 2d).

13. A reversible cutting plate according to claim 12, **characterised in that** the points (2a, 2b, 2c, 2d) of the depression (1) are aligned with respect to the centre (6) of the longitudinal sides.

14. A reversible cutting plate according to one of claims 1 to 10, **characterised in that** a hole is arranged in the reversible cutting plate (9) for the engagement of a chucking bolt of the cutting tool.

15. A reversible cutting plate according to one of claims 1 to 10, **characterised in that** apart from the corners that are formed in accordance with the invention, the reversible cutting plate (9) has a smooth surface.

## Revendications

1. Plaquette de coupe amovible (9) en céramique destinée à être serrée dans un outil de coupe, en vue de l'usinage par enlèvement de copeaux de matériaux moulés, chaque angle de la plaquette de coupe amovible (9) présentant une arête de coupe secondaire (5a, 5b, 5c, 5d) et une arête de coupe principale (4a, 4b, 4c, 4d), **caractérisée par le fait que** les angles de la plaquette de coupe amovible (9) sont réalisés dans environ ¼ du plan diagonal (D), par rectification, compression ou injection, et forment une surface triangulaire (3) et que cette surface triangulaire (3) présente au moins une inclinaison.

2. Plaquette de coupe amovible selon la revendication 1, **caractérisée par le fait que** la surface triangulaire (3) est inclinée sous un angle α, depuis l'arête de coupe secondaire (5a, 5b, 5c, 5d) en direction du milieu de côté (6).

3. Plaquette de coupe amovible selon la revendication 1, **caractérisée par le fait que** la surface triangulaire (3) est divisée en deux surfaces partielles (3a, 3b) par la diagonale (D), et au moins une surface partielle (3a, 3b) est inclinée sous un angle α, perpendiculairement depuis l'arête de coupe principale (4a, 4b, 4c, 4d) ou l'arête de coupe secondaire (5a, 5b, 5c, 5d) en direction du milieu de symétrie (E).

4. Plaquette de coupe amovible selon la revendication 3, **caractérisée par le fait que** les deux surfaces partielles (3a, 3b) sont inclinées en direction du milieu de symétrie (E).

5. Plaquette de coupe amovible selon une des revendications 1 à 5, **caractérisée par le fait que** l'angle α est compris entre 3° et 12°.

6. Plaquette de coupe amovible selon une des revendications 1 à 5, **caractérisée par le fait que** les arêtes de coupe secondaires (5a, 5b, 5c, 5d) et les arêtes de coupe principales (4a, 4b, 4c, 4d) sont décalées de 90° sur les deux faces de la plaquette de coupe amovible (9), de sorte qu'une arête de coupe principale (4a, 4b, 4c, 4d) située sur une face est en vis-à-vis d'une arête de coupe secondaire (5a, 5b, 5c, 5d) située sur l'autre face et inversement.

7. Plaquette de coupe amovible selon une des revendications 1 à 6, **caractérisée par le fait que** les arêtes de coupe secondaires (5a, 5b, 5c, 5d) sont pourvues d'une surface d'appui plane (7) sur leur bord extérieur.

8. Plaquette de coupe amovible selon la revendication 7, **caractérisée par le fait que** la surface d'appui plane (7) s'étend sur toute la longueur de l'arête de coupe secondaire (5a, 5b, 5c, 5d).

9. Plaquette de coupe amovible selon la revendication 7 ou 8, **caractérisée par le fait que** la surface d'appui plane (7) s'étend sur toute la longueur de l'arête de coupe secondaire (5a, 5b, 5c, 5d).

10. Plaquette de coupe amovible selon une des revendications 1 à 9, **caractérisée par le fait que** pour des plaquettes de coupe (9) tournant à gauche, dans une vue de dessus d'une face de la plaquette de coupe amovible (9), dans le sens des aiguilles d'une montre, l'arête de coupe principale (4a, 4b, 4c, 4d) est disposée avant la diagonale (D) et l'arête de coupe secondaire (5a, 5b, 5c, 5d) est disposée après la diagonale (D), et inversement pour des plaquettes de coupe tournant à droite.

11. Plaquette de coupe amovible selon une des revendications 1 à 10, **caractérisée par le fait qu'**un creux (1) est aménagé sur chaque face de la plaquette de coupe amovible (9), en vue de l'entrée en prise d'une griffe de serrage (8).

12. Plaquette de coupe amovible selon la revendication 11, **caractérisée par le fait que** le creux (1) est conformé en étoile à quatre branches (2a, 2b, 2c, 2d).

13. Plaquette de coupe amovible selon la revendication 12, **caractérisée par le fait que** les branches (2a, 2b, 2c, 2d) du creux (1) sont dirigées vers le milieu (6) des côtés.

14. Plaquette de coupe amovible selon une des revendications 1 à 10, **caractérisée par le fait que** la plaquette de coupe amovible (9) comporte un trou pour l'entrée en prise d'une broche de serrage de l'outil de coupe.

15. Plaquette de coupe amovible selon une des revendications 1 à 10, **caractérisée par le fait qu'**en dehors des angles agencés conformément à l'invention, la plaquette de coupe amovible (9) présente une surface lisse.
